# EUROPÄISCHE PATENTANMELDUNG

(11) **EP 3 509 316 A1**
(43) Veröffentlichungstag der Anmeldung: **10.07.2019**
(21) Anmeldenummer: 19150875.3
(22) Anmeldetag: 09.01.2019
(51) Int. Cl.: H04Q 9/00, G05B 9/02, G05B 19/042, H04L 12/40, H04L 12/403

(54) **SICHERHEITSNETZWERK UND SICHERHEITSSENSOR**

(30) Priorität: 09.01.2018 CH 142018
(71) Anmelder: ELESTA GmbH, 7310 Bad Ragaz (CH)
(72) Erfinder: Steiner, Roman, 8725 Ernetschwil (CH); Zöschg, Dietmar R., 8824 Schönenberg (CH); Geges, Norbert, 7324 Vilters (CH); Guntli, Andreas, 8880 Walenstadt (CH); Klima, Andreas, 8890 Flums (CH); Lukas, Verena, 7205 Zizers (CH); Möhr, Raphael, 7304 Maienfeld (CH); Rodoni, Daniele, 6948 Porza (CH)
(74) Vertreter: Riederer Hasler & Partner Patentanwälte AG

(57) **Zusammenfassung**

Dargestellt und beschrieben ist ein Sicherheitsnetzwerk mit mehreren Sicherheitssensoren, welche über einen ersten und über einen zweiten Datenbus miteinander verbunden sind, wobei der erste Datenbus für die Übertragung von nicht-sicherheitsrelevanten Daten ausgebildet ist und der zweite Datenbus für die Übertragung von sicherheitsrelevanten Daten ausgebildet ist. Ausserdem ist vorgesehen, dass wenigstens einer der Sicherheitssensoren eine Schnittstelle zu einem dritten Datenbus aufweist und mit diesem verbunden ist, wobei der Datenbus dazu ausgebildet ist, eine fehlersichere Übertragung von Daten von diesem Sicherheitssensor an ein Steuergerät sicherzustellen.

## Beschreibung

Die Erfindung betrifft ein Sicherheitsnetzwerk für Sicherheitssensoren. Ausserdem betrifft die Erfindung einen Sicherheitssensor sowie die Verwendung eines Sicherheitssensors in einem Sicherheitsnetzwerk und eine Fertigungsanlage mit einem erfindungsgemässen Sicherheitsnetzwerk. Weiters betrifft die Erfindung ein Verfahren zur Übertragung von Daten aus Sicherheitssensoren in einem Sicherheitsnetzwerk.

Um Menschen vor Verletzungen oder Material vor Beschädigungen zu schützen, werden in der Automation von Maschinen sehr häufig Sicherheitssensoren eingesetzt, die mit einem gewissen Sicherheitsstandard eine Gefahrenlage erkennen und melden können. Zum Beispiel können derartige Sicherheitssensoren an Sicherheitstüren für Werkzeugmaschinen, für industrielle Fertigungsanlagen, bei gefährlichen Maschinen wie Sägen oder bei Industrierobotern usw. verwendet werden. Bei solchen Anlagen ist eine Sicherheitsanforderung, dass sich während ihres Betriebes keine Person im Gefahrenbereich der Maschine oder Anlage befinden darf. Hierzu ist jener Bereich, in dem sich beispielsweise ein Maschinenführer zur Einrichtung, Justierung oder Wartung der Anlage aufhalten muss durch Schutzwände umzäunt und der Zugang erfolgt über die genannten Sicherheitstüren. Sind mehrere Sicherheitstüren vorhanden wird in der Regel pro Tür ein Sicherheitssensor verbaut. Die Sicherheitssensoren werden mit einer Ausleseeinheit, welche üblicherweise Teil eines Steuergerätes ist, welches die Anlage steuert, verbunden und bilden so ein Sicherheitsnetzwerk.

Beispielsweise können als Sicherheitssensoren insbesondere Sensoren verstanden werden, die in der Art von Näherungssensoren, die Annäherung eines Gegenstands berührungslos detektieren können. Es ist bekannt hierfür sogenannte RFID (radio-frequency identification) - Elemente einzusetzen. Diese bestehen aus einem meist passivem RFID-Transponder, auch RFID-Tag genannt, und einem RFID-Schreib- und Lesegerät im folgenden kurz RFID-Lesegerät. Bei Annäherung des RFID-Transponders an das RFID-Lesegerät wird der RFID-Transponder durch ein vom RFID-Lesegerät ausgestrahltes elektromagnetisches Wechselfeld angeregt und mit Energie versorgt. Der Mikrocontroller des RFID-Transponders ist dann in der Lage die vom RFID-Lesegerät Befehle zu decodieren und entsprechende Aktionen zu setzen, wie beispielsweise das Ausgeben seiner gespeicherten Information oder das Einschreiben von neuen Speicherinhalten.

Sicherheitstüren werden nun beispielsweise dadurch gesichert, dass an einem ersten Türelement, z.B. am Türrahmen, ein RFID-Transponder und an einem zweiten Türelement, z.B. am Türblatt, ein RFID-Lesegerät angebracht wird. Ist die Sicherheitstüre geschlossen befindet sich der RFID-Transponder im Empfangsbereich des RFID-Lesegerätes, RFID-Transponder und RFID-Lesegerät sind damit gekoppelt und ein Befehls- und Informationsaustausch ist möglich. Wird die Sicherheitstüre geöffnet, kann das RFID-Lesegerät den RFID-Transponder nicht mehr detektieren bzw. auslesen und das RFID-Lesegerät kann dann eine entsprechende Information an eine übergeordnete Steuergerät einer Fertigungsanlage übermitteln, die verhindert, dass die Maschine anläuft und eine allenfalls im Gefahrenbereich befindlichen Person verletzt. Steuergeräte können gebildet sein aus relativ einfachen Sicherheitsrelais bis hin zu komplexen speicherprogammierbaren Steuerungen (SPS).

Für Sicherheitseinrichtungen dieser Art ist ein Sicherheitsintegrationslevel 3 (SIL3) gemäss der Norm IEC 61508 einzuhalten. Diese Einrichtungen haben eine zweifache Sicherheit zu gewährleisten, d.h. ein auftretender Fehler, beispielsweise in der Datenübertragung oder bei der Datenverarbeitung ist insofern redundant, als dass dies noch zu keiner Fehlfunktion der Sicherheitseinrichtung führt. Es ist daher beispielsweise bekannt, die von Sicherheitssensoren ermittelten Daten in einer ersten Datenverarbeitungseinheit einzulesen und zu verarbeiten und danach die eingelesenen Daten in einer zweiten Datenverarbeitungseinheit erneut zu verarbeiten bzw. die verarbeiteten Daten zu überprüfen. In der Folge vergleichen diese beiden Datenverarbeitungseinheiten ihre Ergebnisse und leiten insbesondere sicherheitsrelevante Informationen, wie beispielsweise die Information «Türe ist geschlossen» (was für ein übergeordnetes Steuergerät bedeuten kann, dass die Maschine anlaufen darf), nur dann an ein übergeordnetes Steuergerät einer Maschine oder Anlage weiter, wenn die Ergebnisse der Überprüfung übereinstimmen und somit davon ausgegangen werden kann, dass Datenkonsistenz gegeben ist. In der Regel sind die separaten Datenverarbeitungseinheiten unterschiedlich aufgebaut, beispielsweise durch die Verwendung unterschiedlicher elektronischer Bauteile, wobei trotzdem beide Datenverarbeitungseinheiten bei korrekter Funktion dieselben Ergebnisse erzeugen.

Es wurden ausserdem verschiedenen Standards geschaffen, um eine Kommunikation zwischen Sicherheitssensoren oder Aktoren und Steuer- und Überwachungseinrichtungen zu ermöglichen. Einer davon ist der sogenannte IO-Link-Standard gemäss IEC61131-9 bzw. gemäss IO-Link System Description - Technology and Application, Version July 2013, Order number 4.392 der erweitert wurde, um auch bei sicherheitsrelevanten Anwendungen eingesetzt werden zu können. Bekannt ist diese Erweiterung unter IO-Link Safety Standard gemäss IO-Link Safety System Extensions Specification, Version 1.0, April 2017, Order No: 10.092. Weitere bekannte Standards für sicherheitsrelevante Anwendungen sind beispielsweise: der AS-i Bus Standard oder der CANopen-Safety-Standard.

Die Meldung von sicherheitsrelevanten Zuständen von einem Sicherheitssensor an ein Steuergerät kann somit über eine gesicherte serielle Master-Slave-Verbindung wie z.B. IO-Link Safety geschehen. Hierzu ist es jedoch notwendig, dass jeder Sicherheitssensor als Slave an Auswerteeinheit, welche als Master fungiert, angeschlossen ist und über ein definiertes Protokoll ausgewertet wird. Nachteil dabei ist, dass für jeden benötigten Sicherheitssensor ein eigener Master in der Auswerteeinheit benötigt wird. Somit muss jede Sensoreinheit über eine separate Datenleitung mit dem ihr zugeordneten Master verbunden werden, was selbstredend den schaltungstechnischen und verdrahtungstechnischen Aufwand und damit die Kosten massiv erhöht.

Es ist deshalb Aufgabe der Erfindung ein Sicherheitsnetzwerk so auszugestalten, dass der schaltungstechnische und verdrahtungstechnische Aufwand minimiert wird, ohne dabei die sicherheitstechnischen Standards gegenüber vorbekannten Systemen zu senken. Ausserdem ist Aufgabe der Erfindung Sicherheitssensoren dementsprechend auszugestalten sowie ein Verfahren für ein erfindungsgemässes Sicherheitsnetzwerk zu schaffen.

Gelöst wird diese Aufgabe durch ein Sicherheitsnetzwerk mit den Merkmalen des Anspruchs 1. Vorteilhafte Ausgestaltungen werden in den abhängigen Ansprüchen 2-7 beschrieben. Weiters wird diese Aufgabe durch einen Sicherheitssensor gemäss Anspruch 8 und durch die Verwendung eines Sicherheitssensors in einem erfindungsgemässen Sicherheitsnetzwerk und durch eine Fertigungsanlage mit einem erfindungsgemässen Sicherheitsnetzwerk gelöst. Weitere vorteilhafte Ausgestaltungen finden sich in den übrigen Unteransprüchen.

Das erfindungsgemässe Sicherheitsnetzwerk weist mehrere Sicherheitssensoren auf, welche über einen ersten und über einen zweiten Datenbus miteinander verbunden sind, wobei der erste Datenbus für die Übertragung von nicht-sicherheitsrelevanten Daten ausgebildet ist und der zweite Datenbus für die Übertragung von sicherheitsrelevanten Daten ausgebildet ist, wobei wenigstens einer der Sicherheitssensoren eine Schnittstelle zu einem dritten Datenbus aufweist und mit diesem verbunden ist, wobei der Datenbus dazu ausgebildet ist, eine fehlersichere Übertragung von Daten von diesem Sicherheitssensor an ein Auswertegerät sicherzustellen.

Erfindungsgemäss wird somit ein Unternetzwerk aus mehreren Sicherheitssensoren gebildet, die über zwei Datenbusse miteinander verbunden sind, wobei sicherheitsrelevante Daten über einen entsprechend sicher ausgestalteten Bus übertragen werden und nicht-sicherheitsrelevante Daten über einen einfacher ausgestalten Bus transportiert werden. Sicherheitsrelevante Daten beinhalten beispielsweise Informationen über den Schliesszustand von Sicherheitstüren. Nicht-sicherheitsrelevante Informationen können Adressinformationen oder Informationen zur Identifikationsnummer des Sicherheitssensors betreffen. Somit ist sichergestellt, dass sicherheitsrelevante Informationen ordnungsgemäss zu jenem Sicherheitssensor übertragen werden, welche mit dem Steuergerät der Fertigungsanlage bzw. mit einem Auswertegerät, welches Teil dem Steuergerät ist, verbunden ist.

Die im Folgenden angeführten vorteilhaften Ausführungsvarianten führen alleine oder in Kombination miteinander zu weiteren Verbesserungen des Sicherheitsnetzwerkes.

Die fehlersichere Übertragung von Daten über den dritten Datenbus kann in einer ersten Ausführungsform der Erfindung durch die Bildung von Check-Summen, die Vergabe von Laufnummern und die Überwachung der Antwortzeiten sichergestellt sein. Ebenso kann der dritte Datenbus als eine gesicherte serielle Master-Slave Verbindung ausgeführt sein, wobei diese in vorteilhafter Weise entsprechend dem IO-Link Safety Standard ausgebildet ist. Die Einhaltung dieses Safety Standards gewährleistet die sichere Kommunikation zwischen Sicherheitssensor und Steuergerät. Die Einhaltung des IO-Link Safety Standards führt dazu, dass die sicherheitsrelevante Kommunikation zwischen Steuergerät und Sicherheitssensor fehlersicher ist, obwohl die Daten nur über einen einzigen Übertragungsweg gesendet werden. Die Redundanz ist also nicht durch die doppelte Ausführung von Schaltungsanordnungen, Übertragungsleitungen oder dergleichen gegeben, sondern wird durch die Einhaltung des IO-Link Safety Standards gewährleistet.

In einer weiteren Ausführungsform der Erfindung ist der erste Datenbus als bidirektionaler, serieller Bus ausgebildet und der der zweite Datenbus kann als unidirektionaler, serieller Bus ausgebildet sein. Diese unterschiedlichen Bustopologien werden in bevorzugter Weise für die Übertragung der Daten, welche unterschiedlich relevant für die Sicherheit sind, genutzt und stellen ein Unternetzwerk dar.

In vorteilhafter Weise kann der zweite Datenbus redundant ausgeführt sein und zwei voneinander getrennte Datenleitungen aufweisen, um über diese dieselbe Information zu übertragen. Weiters kann der zweite Datenbus als Punkt zu Punkt Verbindung ausgebildet sein, d.h. der Datenbus verbindet jeweils nur einen Sicherheitssensor mit einem nächsten Sicherheitssensor.

Gemäss einer vorteilhaften Ausführung der Erfindung können die Sicherheitssensoren dazu ausgebildet sein, empfangene sicherheitsrelevanten Daten eines Sicherheitssensors, welche eine Gefahrenlage signalisieren, unmittelbar an den nächsten Sicherheitssensor weiterzuleiten und empfangene sicherheitsrelevante Daten, welche signalisieren, dass keine Gefahrenlage vorliegt mit den eigenen sicherheitsrelevanten Daten zu vergleichen und nur dann zu einem nächsten Sicherheitssensor weiterzuleiten, wenn der Vergleich ergibt, dass die Daten identisch sind.

In einer Weiterbildung der Erfindung kann ein entsprechender Sicherheitssensor dazu ausgebildet sein, empfangene sicherheitsrelevanten Daten eines Sicherheitssensors, welche eine Gefahrenlage signalisiert unmittelbar an einen nächsten Sicherheitssensor über den zweiten Datenbus (23) weiterzuleiten und sicherheitsrelevante Daten, welche signalisieren, dass keine Gefahrenlage vorliegt, mit den eigenen sicherheitsrelevanten Daten zu vergleichen und nur dann zu einem nächsten Sicherheitssensor weiterzuleiten, wenn der Vergleich ergibt, dass die Daten identisch sind. Weiter kann der Sicherheitssensor dazu ausgebildet sein, empfangene oder selbst generierte sicherheitsrelevante Daten, welche eine Gefahrenlage signalisieren unmittelbar an ein Steuergerät über einen fehlersicheren dritten Datenbus weiterzuleiten.

Die Aufgabe der vorliegenden Erfindung wird auch gelöst durch einen Sicherheitssensor mit einer ersten Schnittstelle zur Verbindung mit einem ersten Datenbus, um nicht-sicherheitsrelevante Daten zu senden und zu empfangen, mit einer zweite Schnittstelle zur Verbindung mit einem zweiten Datenbus, um sicherheitsrelevante Daten zu senden und zu empfangen, und mit einer dritten Schnittstelle zu einem dritten Datenbus, wobei der Sicherheitssensor dazu ausgebildet ist, über die dritte Schnittstelle eine fehlersichere Übertragung von Daten an ein Steuergerät einer Fertigungsanlage sicherzustellen.

In einer bevorzugten Ausführungsform weist der Sicherheitssensor ein RFID-Schreib- und Lesegerät - kurz RFID-Lesegerät und einen RFID-Transponder auf.

Entsprechend der Ausgestaltung der Sicherheitssensoren ist in Anspruch 14 ein Verfahren angegeben, welches ebenfalls die Aufgabe löst. Anspruch 15 beschreibt eine vorteilhafte Weiterbildung dieses Verfahrens.

Die zuvor angeführten Ausführungsvarianten führen allein oder in Kombination miteinander zu weiteren Verbesserungen der Erfindung. Weitere Vorteile und Merkmale der Erfindung ergeben sich aus der nachfolgenden Beschreibung der Erfindung unter Bezugnahme auf schematische Darstellungen.

Es zeigen:
- Figur 1:: eine schematische Darstellung eines Sicherheitsnetzwerkes wie es aus dem Stand der Technik bekannt ist;
- Figur 2:: eine schematische Darstellung eines erfindungsgemässen Sicherheitsnetzwerkes.

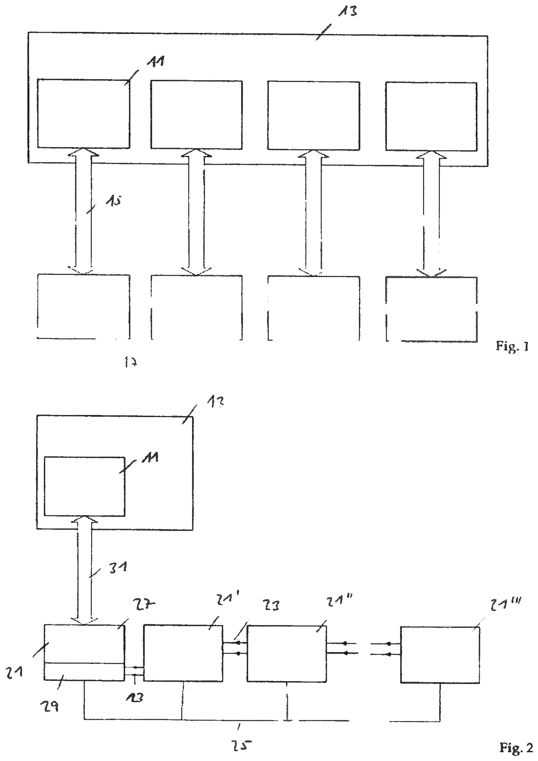

In der Figur 1 ist ein Sicherheitsnetzwerk gezeigt, wie es aus dem Stand der Technik bekannt ist. Es ist hierbei ein Sicherheitssensor 17 mit einer einzigen Datenschnittstelle ersichtlich, der als Slave über eine Datenleitung 15 mit einem Master 11 verbunden ist. Der Master 11 ist Teil einer Auswerteeinheit 13, die wiederum Teil eines nicht dargestellten Steuergerätes einer ebenfalls nicht dargestellten Fertigungsanlage ist. Weil vier Sensoreinheiten vorgesehen sind, müssen auch vier Master 11 und vier Datenleitungen vorhanden sein. Um die sicherheitsrelevanten Sensorinformationen ordnungsgemäss zum Master 11 übertragen zu können, müssen die Datenleitungen 15 fehlersicher ausgeführt werden. Somit ist es bei vier Sensoreinheiten 17 notwendig vier Datenleitungen 15 zwischen jedem Master 11 und jeder Sensoreinheit 17 zu verlegen, was entsprechend aufwendig und teuer ist.

In Figur 2 ist ein erfindungsgemässes Sicherheitsnetzwerk gezeigt. Es besteht aus einer Mehrzahl von Sensoreinheiten 21, 21', 21", 21''', einem ersten unidirektionalen Datenbus 23 und einem zweiten bidirektionalen Datenbus 25 und einem dritten Datenbus 31. Der Sicherheitssensor 21 ist über den fehlersicheren Datenbus 31, der bevorzugt dem IO Link Safety Standard entspricht, mit einem Master 11 verbunden. Der Master 11 ist Teil einer Auswerteeinheit 13, die wiederum Teil eines nicht dargestellten Steuergerätes einer ebenfalls nicht dargestellten Fertigungsanlage ist. Die Sensoreinheit 21 weist drei Schnittstellen auf, wobei der Sicherheitssensor 21 die Verbindung mit dem fehlersicheren Datenbus 31 bevorzugt als IO Link Device 27 herstellt und der Master 11 als IO Link Master fungiert.

Die übrigen Schnittstellen der Sensoreinheit 21 sind mit den weiteren Sensoreinheiten 21', 21", 21''' über einen unidirektionalen Datenbus 23 und über einen zweiten bidirektionalen Datenbus 25 verbunden. Hierbei dient der unidirektionale Datenbus 23 der Übertragung von sicherheitsrelevanten Informationen, also von Informationen, die eine Gefahrenlage signalisieren. Dies könnte zum Beispiel der Hinweis darauf sein, dass eine Sicherheitstüre einer Fertigungsanlage offen steht. Im einfachsten, aber durchaus nicht unbedeutendsten Fall kann die Information hinsichtlich dem Vorliegen einer Gefahrenlage über den Datenbus 23 mit einer einfachen Ja/Nein bzw. Null/Eins Übertragung übermittelt werden. Das heisst, dass lediglich in Form von Spannung liegt an (bspw. für Ja) oder Spannung liegt nicht an (bspw. für Nein) signalisiert wird, ob eine Gefahrenlage vorliegt oder nicht. Um diese an sich einfache Datenübertragung des Datenbusses 23 redundant auszuführen, wird die Information über zwei Busleitungen übertragen und nur wenn über beide Leitungen signalisiert wird, dass keine Gefahrenlage vorliegt, wird eine Fertigungsanlage zur Inbetriebnahme freigeben.

Über den bidirektionalen Datenbus 25 werden nicht-sicherheitsrelevante Informationen übertragen. Dies können zum Beispiel Adressinformationen, Angaben zur Identifikationsnummer einer Sensoreinheit 21, 21', 21", 21''' oder Steuerbefehle usw. sein. Der Sensoreinheit 21 kann eine Mastereinheit 29 zugeordnet sein, die als Master für den Datenbus 25 agiert. Dementsprechend sind die übrigen Sensoreinheiten 21', 21", 21"' als Slave ausgebildet. Bevorzugt wird jedoch eine Ausführungsform gewählt, bei der alle Sensoreinheiten 21, 21', 21", 21''' möglichst baugleich ausgeführt sind, wobei erfindungsgemäss schlussendlich nur eine Sensoreinheit 21 mit dem Master 11 verbunden sein muss.

Erfindungsgemäss erfolgt die Datenübertragung folgendermassen: ein erster Sicherheitssensor 21, 21', 21", 21''' empfängt über den ersten Datenbus 25 sicherheitsrelevanten Daten eines zweiten Sicherheitssensors 21, 21', 21", 21''', welche eine Gefahrenlage signalisieren, und leitet diese Daten unmittelbar an den nächsten Sicherheitssensor 21, 21', 21", 21''' über den zweiten Datenbus 23 weiter. Sicherheitsrelevante Daten, welche signalisieren, dass keine Gefahrenlage vorliegt vergleicht der zweiten Sicherheits sensors 21, 21', 21", 21''' mit den eigenen sicherheitsrelevanten Daten und leitet diese nur dann zu einem dritten Sicherheitssensor 21, 21', 21", 21''' weiter, wenn der Vergleich ergibt, dass die Daten identisch sind. Jener Sicherheitssensor, welcher mit dem fehlersicheren Datenbus 31 verbunden ist, leitet empfangene oder selbst generierte sicherheitsrelevante Daten, welche eine Gefahrenlage signalisieren, unmittelbar an den Master 11 weiter.

Während die Erfindung vorstehend unter Bezugnahme auf eine spezifische Ausführungsform beschrieben wurde, ist es offensichtlich, dass Änderungen, Modifikationen, Variationen und Kombinationen ohne vom Erfindungsgedanken abzuweichen gemacht werden können.

### BEZUGSZEICHENLISTE:

- 11: Master
- 13: Steuergerät
- 15: Datenbus
- 17: Sicherheitssensor mit einer Datenschnittstelle
- 21: Sicherheitssensor
- 23: Bidirektionaler Datenbus
- 25: Unidirektionaler Datenbus
- 27: IO-Link Devive
- 29: IO-Link Device
- 31: Fehlersicherer Datenbus

## Patentansprüche

1. Sicherheitsnetzwerk mit mehreren Sicherheitssensoren (21, 21', 21", 21'''), welche über einen ersten und über einen zweiten Datenbus (23, 25) miteinander verbunden sind, wobei der erste Datenbus (25) für die Übertragung von nicht-sicherheitsrelevanten Daten ausgebildet ist und der zweite Datenbus (23) für die Übertragung von sicherheitsrelevanten Daten ausgebildet ist, wobei wenigstens einer der Sicherheitssensoren (21, 21', 21", 21''') eine Schnittstelle zu einem dritten Datenbus (31) aufweist und mit diesem verbunden ist, wobei der Datenbus (31) dazu ausgebildet ist, eine fehlersichere Übertragung von Daten von diesem Sicherheitssensor (21, 21', 21", 21''') an ein Steuergerät sicherzustellen.

2. Sicherheitsnetzwerk nach Anspruch 1,
**dadurch gekennzeichnet,**
**dass** die fehlersichere Übertragung von Daten über den dritten Datenbus (31) durch die Bildung von Check-Summen, die Vergabe von Laufnummern und die Überwachung der Antwortzeiten sichergestellt ist.

3. Sicherheitsnetzwerk nach Anspruch 1 oder 2,
**dadurch gekennzeichnet,**
**dass** der dritte Datenbus (31) als eine gesicherte serielle Master-Slave Verbindung ausgeführt ist, und die Master-Slave Verbindung vorzugsweise entsprechend dem IO-Link Safety Standard ausgebildet ist.

4. Sicherheitsnetzwerk nach einem der vorigen Ansprüche,
**dadurch gekennzeichnet,**
**dass** der erste Datenbus (25) als bidirektionaler, serieller Bus ausgebildet ist.

5. Sicherheitsnetzwerk nach einem der vorigen Ansprüche,
**dadurch gekennzeichnet,**
**dass** der zweite Datenbus (23) als unidirektionaler, serieller Bus ausgebildet ist.

6. Sicherheitsnetzwerk nach dem Anspruch 5,
**dadurch gekennzeichnet,**
**dass** der zweite Datenbus (23) redundant ausgeführt ist und zwei voneinander getrennte Datenleitungen aufweist, um über diese dieselbe Information zu übertragen, wobei der zweite Datenbus (23) vorzugsweise als Punkt zu Punkt Verbindung ausgebildet ist und jeweils nur einen Sicherheitssensor (21, 21', 21", 21''') mit einem nächsten Sicherheitssensor (21, 21', 21", 21''') verbindet.

7. Sicherheitsnetzwerk nach einem der vorigen Ansprüche,
**dadurch gekennzeichnet,**
**dass** die Sicherheitssensoren (21, 21', 21", 21''') dazu ausgebildet sind, empfangene sicherheitsrelevante Daten eines Sicherheitssensors (21, 21', 21", 21'''), welche eine Gefahrenlage signalisieren unmittelbar an den nächsten Sicherheitssensor (21, 21', 21", 21''') weiterzuleiten und sicherheitsrelevanten Daten, welche signalisieren, dass keine Gefahrenlage vorliegt mit den eigenen sicherheitsrelevanten Daten zu vergleichen und nur dann zu einem nächsten Sicherheitssensor (21, 21', 21", 21''') weiterzuleiten, wenn der Vergleich ergibt, dass die Daten identisch sind.

8. Sicherheitssensor (21, 21', 21", 21''') mit einer erste Schnittstelle zur Verbindung
mit einem ersten Datenbus (25), um nicht-sicherheitsrelevante Daten zu senden und zu empfangen,
mit einer zweite Schnittstelle zur Verbindung mit einem zweiten Datenbus (23), um sicherheitsrelevante Daten zu senden und zu empfangen, und
mit einer dritten Schnittstelle zu einem dritten Datenbus (31), wobei der Sicherheitssensor dazu ausgebildet ist, über die dritte Schnittstelle eine fehlersichere Übertragung von Daten an ein Steuergerät sicherzustellen.

9. Sicherheitssensor nach Anspruch 8,
**dadurch gekennzeichnet**
**dass** der Sicherheitssensor (21, 21', 21", 21''') dazu ausgebildet ist, empfangene sicherheitsrelevanten Daten eines Sicherheitssensors (21, 21', 21", 21'''), welche eine Gefahrenlage signalisieren unmittelbar an den nächsten Sicherheitssensor (21, 21', 21", 21''') über den zweiten Datenbus (23) weiterzuleiten und sicherheitsrelevante Daten, welche signalisieren, dass keine Gefahrenlage vorliegt mit den eigenen sicherheitsrelevanten Daten zu vergleichen und nur dann zu einem nächsten Sicherheitssensor (21, 21', 21", 21''') weiterzuleiten, wenn der Vergleich ergibt, dass die Daten identisch sind.

10. Sicherheitssensor nach Anspruch 8 oder 9,
**dadurch gekennzeichnet,**
**dass** der Sicherheitssensor (21, 21', 21", 21''') dazu ausgebildet ist, empfangene oder selbst generierte sicherheitsrelevante Daten, welche eine Gefahrenlage signalisieren unmittelbar an ein Steuergerät über einen fehlersicheren dritten Datenbus (31) weiterzuleiten.

11. Sicherheitssensor nach Anspruch 8, 9 oder 10,
**dadurch gekennzeichnet,**
**dass** der Sicherheitssensor (21, 21', 21", 21''') dazu ausgebildet ist, über die dritte Schnittstelle eine gesicherte serielle Master-Slave Verbindung zum dritten Datenbus herzustellen, wobei die Master-Slave Verbindung vorzugsweise entsprechend dem IO-Link Safety Standard ausgebildet ist.

12. Sicherheitssensor nach einem der Ansprüche 8 bis 11,
**dadurch gekennzeichnet,**
**dass** der Sicherheitssensor (21, 21', 21", 21''') ein RFID-Lesegerät und ein RFID-Transponder aufweist

13. Fertigungsanlage mit einer die Fertigungsanlage steuernden Steuergerät und mit einem die Fertigungsanlage umschliessenden Schutzzaun mit wenigstens zwei Sicherheitstüren, wobei jeder Sicherheitstüre ein Sicherheitssensor (21, 21', 21", 21''') zugordnet ist, um den Schliesszustand der Sicherheitstüre zu überwachen, wobei das Steuergerät und die Sicherheitssensoren (21, 21', 21", 21''') Teil eines Sicherheitsnetzwerkes nach einem der vorigen Ansprüche sind.

14. Verfahren zur Übertragung von Daten aus Sicherheitssensoren in einem Sicherheitsnetzwerk,
**dadurch gekennzeichnet,**
**dass** ein erster Sicherheitssensor (21, 21', 21", 21''') über einen ersten Datenbus (25) empfangene sicherheitsrelevanten Daten eines zweiten Sicherheitssensors (21, 21', 21", 21'''), welche eine Gefahrenlage signalisieren unmittelbar an den nächsten Sicherheitssensor (21, 21', 21", 21''') über einen zweiten Datenbus (23) weiterleitet und sicherheitsrelevante Daten, welche signalisieren, dass keine Gefahrenlage vorliegt mit den eigenen sicherheitsrelevanten Daten vergleicht und nur dann zu einem nächsten Sicherheitssensor (21, 21', 21", 21''') weiterleitet, wenn der Vergleich ergibt, dass die Daten identisch sind.

15. Verfahren zur Übertragung von Daten nach Anspruch 14,
**dadurch gekennzeichnet,**
**dass** der Sicherheitssensor (21), welcher mit dem fehlersicheren Datenbus (31) verbunden ist, empfangene oder selbst generierte sicherheitsrelevante Daten, welche eine Gefahrenlage signalisieren, unmittelbar an ein Steuergerät über diesen Datenbus (31) weiterleitet.
